# FASCICULE DE BREVET EUROPEEN

(11) **EP 0 620 134 B1**
(45) Date de publication et mention de la délivrance du brevet: **05.11.1997**
(21) Numéro de dépôt: 94400086.8
(22) Date de dépôt: 13.01.1994
(51) Int. Cl.: B60J 10/02, B60J 1/02, B29C 33/48

(54) **Vitrage automobile prééquipé pour le collage dans une baie et procédé de fabrication**
Zur Verklebung in eine Rahmenöffnung vorgefertigte Farbzeugverglasung und Herstellungsverfahren
Vehicle glazing preassembled in order to be glued in an opening and method for its manufacture

(30) Priorité: 16.01.1993 DE 4301026; 03.02.1993 DE 4302981; 08.04.1993 DE 4311584
(43) Date de publication de la demande: 19.10.1994
(60) Demande divisionnaire: 97104468.0
(73) Titulaire: SAINT-GOBAIN VITRAGE, 92400 Courbevoie (FR); SEKURIT SAINT GOBAIN Deutschland GmbH und Co. KG, D-52066 Aachen (DE)
(72) Inventeur: Cornils, Gerd, D-52399 Merzenich (DE); Kotte, Rolf, D-52477 Alsdorf-Begau (DE); Bruck, Karl Heinrich, D-38442 Wolfsburg (DE); Fischer, Florian, D-52477 Alsdorf (DE); von Alpen, Ulrich, D-52078 Aachen (DE); Ohlenforst, Hans, D-52064 Aachen (DE)
(74) Mandataire: Muller, René

(56) Documents cités:
- EP-A- 0 248 707
- EP-A- 0 258 128
- EP-A- 0 421 833
- AUTOMOTIVE ENGINEERING, vol.100, no.12, Décembre 1992, WARRENDALE,PA pages 15 - 17 'Modular Glazing'

## Description

L'invention concerne un vitrage pour le montage par collage sur la tôle d'une baie en particulier un vitrage automobile comportant un profilé en forme de cadre à sa périphérie, profilé qui comporte une section en U dirigée vers la tôle de la baie et est constitué d'un polymère, le profilé comportant de part et d'autre du U deux ailes équipées vers l'intérieur de nervures servant à l'accrochage du cordon de colle placé à l'intérieur dudit U et le procédé pour le fabriquer.

Un vitrage du type précédent est connu par le document EP-B-0 258 128. Dans ce document la liaison entre le vitrage prééquipé et la tôle de la baie de la fenêtre se fait essentiellement grâce à une liaison adhésive entre la colle et le profilé polymérisé en forme de cadre. La structure de la partie creuse du profilé avec ses nervures longitudinales a pour fonction dans ce cas d'améliorer encore la liaison entre la colle de pose et le polymère du profilé. Ce sont les nervures longitudinales qui produisent l'accrochage mécanique supplémentaire entre le profilé polymérisé et la colle. Le profilé polymérisé en forme de cadre est constitué dans le vitrage connu de polyuréthane soit avec un système monocomposant qui durcit à l'humidité soit avec un système à deux composants qui réagissent immédiatement après leur mélange au moment de l'extrusion sur le vitrage.

Grâce à ce document il est également connu de diminuer volontairement l'adhésion entre le profil polymérisé et la colle de pose ou même de l'empêcher totalement de telle manière que la liaison ne soit assurée que par l'accrochage mécanique procuré par la forme de la partie commune au profilé et à la colle de montage. On obtient dans ce cas la diminution ou la suppression de la liaison adhésive entre les deux par l'interposition d'un matériau intermédiaire ad hoc.

L'état de la technique antérieure permet de situer la mission que se donne l'invention dans le fait de trouver une combinaison de matériaux pour le profilé polymérisé d'une part et pour la colle de pose de l'autre telle qu'elle permette d'une part sans l'interposition d'un autre matériau d'éviter l'adhésion entre les deux matériaux tout en garantissant une excellente tenue mécanique de l'un par rapport à l'autre.

L'invention se donne également pour tâche de permettre un durcissement rapide de la colle de pose de manière à permettre, en cas de nécessité, un démontage du vitrage qu'on vient de poser, peu de temps après son installation dans la baie.

L'invention propose, pour atteindre ce but un vitrage du type divulgué dans EP-A-0 258 128 tel que défini dans le préambule de la revendication 1; ce vitrage étant caractérisé par le fait d'avoir d'une part un profilé en forme de cadre à base d'un élastomère polyoléfine thermoplastique fait d'un polypropylène isotactique et d'un caoutchouc éthylène-propylène-diène et de l'autre une colle à base d'un système de polyuréthane monocomposant polymérisant à l'humidité.

Selon l'invention des vitrages prééquipés peuvent être montés sans aucune préparation supplémentaire grâce aux méthodes traditionnelles de collage. Il suffit qu'après avoir déposé un cordon de la colle de pose à l'intérieur du profilé en U on pose l'ensemble dans la baie. Après durcissement de la colle, le vitrage peut être à tout moment extrait de sa feuillure grâce à une simple pression. Lors de cette opération, les côtés du profilé en U se déforment et s'écartent de la colle durcie.

Plus tard le vitrage démonté peut être de nouveau utilisé et monté à nouveau. Pour réaliser cette opération on commence par enlever la colle durcie qui adhère à la carrosserie puis l'on procède comme lors de la première monte.

Cette technique de pose de vitrage est particulièrement avantageuse dans le cas des vitrages automobiles car elle permet de démonter simplement un vitrage qui vient d'être posé tout en autorisant sa réutilisation ultérieure. Ainsi lorsqu'on doit faire un raccord de peinture sur une carrosserie, dans le voisinage d'un pare-brise par exemple, on peut effectuer toutes les opérations de retouche après avoir démonté le vitrage. Il suffit à la fin de l'opération de procéder à la pose comme la première fois. De même à la fin de la vie d'une automobile il est très facile de séparer les vitrages de la tôle peinte de manière à procéder à leurs recyclages respectifs.

Comme élastomère polyoléfine thermoplastique à base de polypropylène isotactique et de caoutchouc éthylène-propylène-diène (EPDM), on utilisera avantageusement le produit SANTOPRENE A, type 111-64 de la Société Advanced-Elastomer-Systems. Comme colle de pose le produit BETASEAL de la Société Gurit-Essex s'est montré particulièrement intéressant. La combinaison de ces deux matériaux fournit des propriétés mécaniques à l'ensemble, particulièrement satisfaisantes ainsi que des conditions d'adhérence entre eux adaptées au problème.

Dans ce qui suit on présente des exemples de réalisation de l'invention illustrés par les dessins.

Parmi les figures :
- la figure 1 montre un vitrage automobile prééquipé d'un profilé polymérisé collé sur le verre d'un seul côté.
- la figure 2 illustre le procédé de fabrication du vitrage de la figure 1.
- la figure 3 montre un vitrage équipé d'un cadre profilé emprisonnant le chant du verre.
- sur la figure 4 on montre un dispositif destiné à revêtir le creux du profilé en U avec un dépôt contenant de l'humidité,
- et la figure 5 montre un vitrage équipé d'un cadre profilé en deux parties.

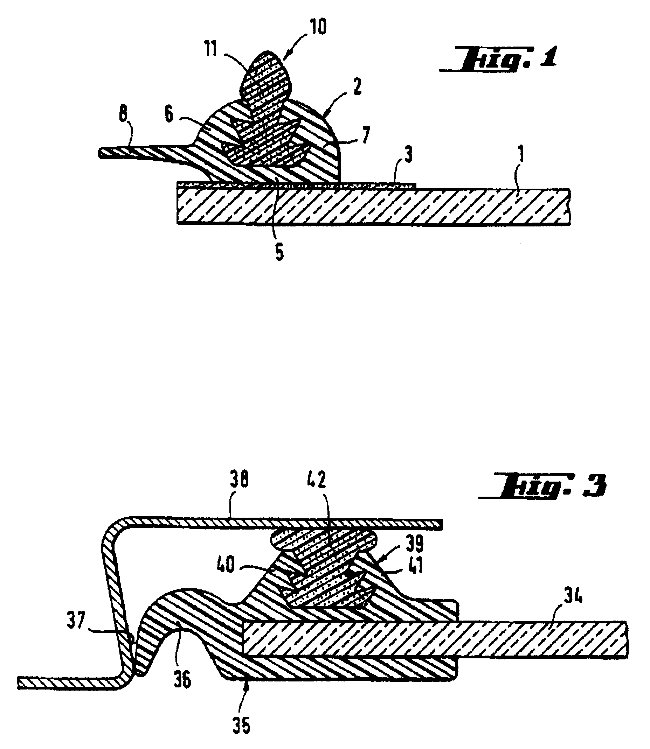

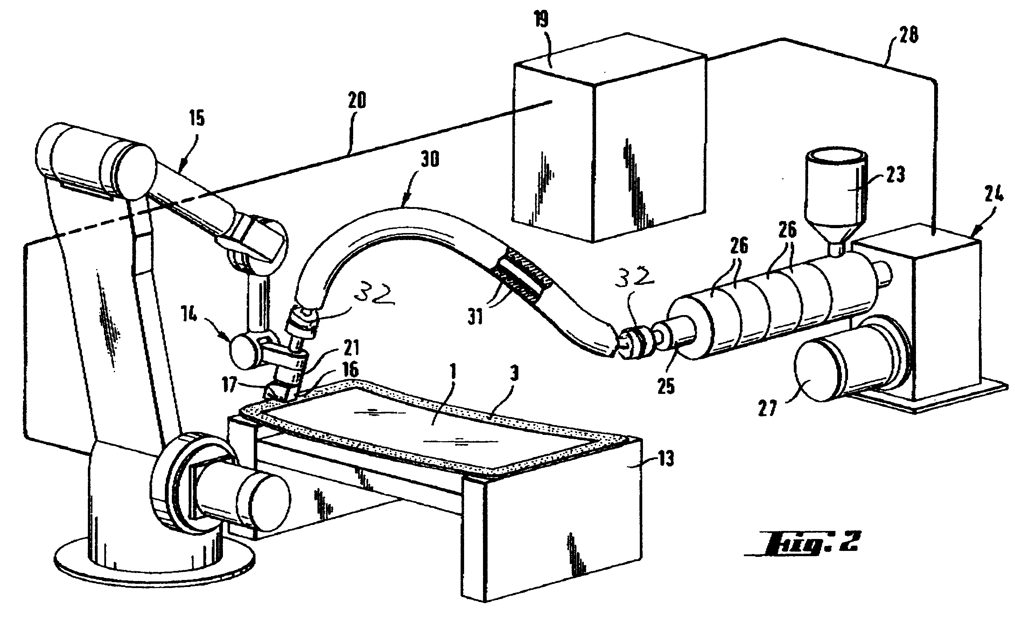

Sur la figure 1 on voit un vitrage automobile prééquipé pour le montage direct par collage dans la baie d'une automobile. Le vitrage 1 est pourvu d'un cadre polymérisé 2 déposé d'un seul côté du verre par extrusion. Le dispositif pour produire un tel vitrage est représenté figure 2.

Le vitrage représenté figure 1 est équipé du côté destiné à être placé vis-à-vis de la tôle de la carrosserie d'un dépôt 3 en forme de cadre fait d'un émail cuit à chaud. Après dépôt sur le cadre 3 d'un primaire adapté, on dépose le profilé 2 par extrusion sur l'émail 3. Le profil 2 a une section qui comporte essentiellement une forme de U avec un fond 5 et deux ailes 6 et 7. Le profilé 2 est équipé par ailleurs d'une lèvre 8 qui remplit des fonctions d'étanchéité et de centrage.

Le profil 2 est fait d'une matière thermoplastique constituée essentiellement d'un élastomère polyoléfine à base de polypropylène isotactique et de caoutchouc éthylène-propylène-diène (EPDM). Un produit qui convient parfaitement est le SANTOPRENE de la Société Advanced-Elastomer-System. Le primaire déposé sur la couche d'émail 3 est avantageusement constitué d'un système polyuréthane à deux composants modifié dans un solvant. Celui-ci peut être un mélange de trichloréthylène et de 1,1,1 - trichloréthane et de chlorure de méthylène. Ce sont par exemple les produits X-8310 de la Société Henkel ou AK-920 de Koemmerling.

Les ailes latérales 6 et 7 du profilé possèdent des nervures longitudinales. L'espace interne du profilé limité par les ailes latérales s'élargit vers le bas, il prend ainsi la forme d'un sapin de noël. Lors de la pose du vitrage on remplit cet espace interne avec la colle de pose 10. Ce sera par exemple le produit Bétaseal de Gurit-Essex. Cette colle destinée à adhérer sur la tôle 38 qui limite la baie de la carrosserie a la caractéristique de n'établir aucun lien adhésif avec le profilé 2. La conséquence en est qu'il n'y a pas collage entre la colle et le profilé et que l'assemblage ne tiendra après durcissement de la colle que grâce à un accrochage mécanique entre la colle durcie 10 et le profilé 2. La colle 10 est déposée dans le creux du profilé 2 à l'aide d'une buse de telle manière qu'elle remplisse complètement le creux du profilé et que par ailleurs elle déborde sous la forme d'une excroissance 11. Celle-ci constitue la réserve de colle qui permettra la fixation par collage de l'ensemble du vitrage automobile dans la baie.

Sur la figure 2 on retrouve le vitrage 1 placé avec précision sur un support 13 pour permettre le dépôt du cadre en polymère 2. Le vitrage 1 est chauffé jusqu'à une température de 70 à 90°C. Le robot 15 comporte un bras et une "main" 14. Celle-ci est équipée d'une buse d'extrusion 16. La buse possède un orifice 17 calibré qui permet d'extruder le profilé 2 avec la section voulue.

La buse d'extrusion 16 est déplacée par le robot 15 au bord du vitrage 1 selon un programme prévu à l'avance. Les commandes sont fournies par un processeur 19 par l'intermédiaire des liaisons 20. La buse d'extrusion 16 est équipée d'un élément de chauffage 21 de manière à maintenir la matière à extruder à une température d'environ 200°C, température nécessaire pour permettre l'extrusion dans de bonnes conditions.

La matière à extruder se présente sous forme de granulés, on les introduit dans la trémie 23 d'où ils sont introduits dans l'extrudeuse à vis 24 où ils sont fondus et conduits sous pression à la tête d'extrusion 16. Le cylindre 25 de l'extrudeuse 24 qui contient une vis sans fin est chauffé grâce à plusieurs anneaux chauffants 26. Ce système permet de maintenir à une température homogène tous les éléments de l'extrudeuse. Le moteur 27 qui anime la vis 24 est commandé, tout comme le robot 15, par le processeur 19.

La liaison entre le cylindre 25 de l'extrudeuse 24 et la buse d'extrusion 16 se fait grâce à un tuyau chauffant 30 capable de supporter de hautes pressions. Le tuyau chauffant 30 doit en effet supporter des pressions pouvant atteindre 250 bars. Il comporte des résistances chauffantes 31 qui garantissent que le tuyau 30 se trouve à une température de l'ordre de 200°C.

Par ailleurs, ce tuyau 30 doit être suffisamment flexible pour pouvoir autoriser le déplacement de la buse 16 sans limitation lors de l'extrusion que le robot 15 effectue à la périphérie du vitrage 1.

Le tuyau haute pression 30 possède naturellement une certaine résistance à la torsion qui pourrait éventuellement être gênante lors de l'extrusion. En effet, lorsque la "main" 14 du robot a effectué une rotation de 360° autour du vitrage, cette "main" a elle-même tourné de 360° par rapport à l'autre extrémité du tuyau 30. Pour éviter une détérioration du tuyau, on l'équipe d'un ou plusieurs joints tournants 32.

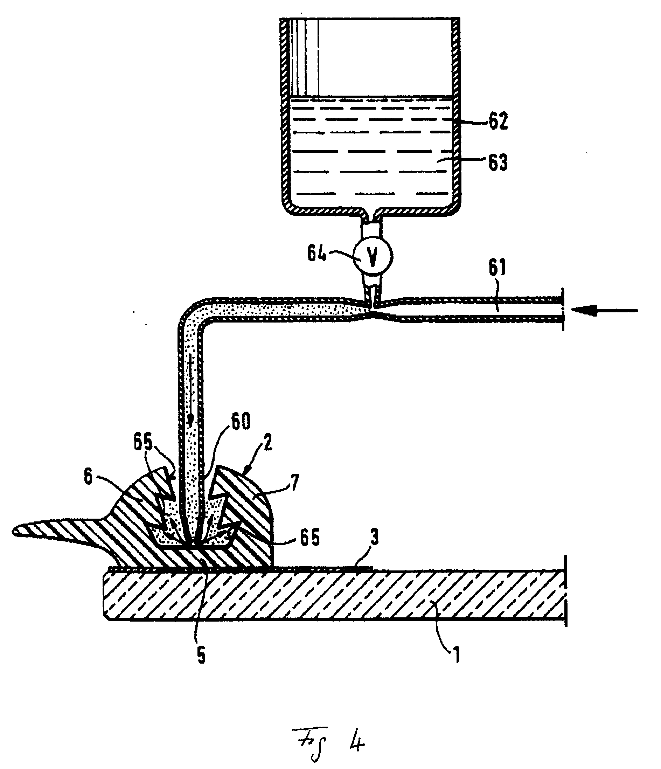

Sur la figure 3, le vitrage 34 prééquipé selon l'invention possède cette fois un cadre 35 en polymère obtenu par une technique d'encapsulation c'est-à-dire par moulage haute pression. On voit que dans ce cas le vitrage 34 est enchâssé dans son cadre en élastomère 35. Ce cadre 35 est équipé d'une lèvre débordante 36. Lorsque le vitrage est posé, la lèvre 36 s'appuie sur la feuillure 37 du cadre de la fenêtre et obture ainsi l'espace laissé libre entre le vitrage et la carrosserie. Cette lèvre qui occupe en général toute la périphérie du vitrage permet également à celui-ci de se centrer automatiquement dans la baie lors de la pose. La tôle 38 de la baie qui se trouve vis-à-vis du bord du vitrage et sensiblement parallèle à lui est utilisée pour le collage du vitrage prééquipé dans la baie. Le cadre profilé 35 possède en face de la tôle 38 une section en U 39 dont les ailes latérales 40, 41 sont équipées de nervures longitudinales sur leurs faces internes. La largeur du U décroît de sa base vers ses extrémités. Le creux est rempli de la colle de pose 42. Les matériaux utilisés respectivement pour constituer le cadre encapsulé 35 et la colle de pose 42 sont les mêmes que ceux qui ont été décrits lors de la description de la figure 1.
Sur la figure 3, on voit comment l'excroissance de la colle de pose qui a été déposée à l'intérieur du creux du profilé en U s'écrase pour venir adhérer à la tôle 38 de la baie. C'est sous cette forme qu'elle va durcir pour alors assurer un accrochage mécanique entre le cadre profilé 35 et la baie de la carrosserie sur laquelle elle adhère.

Lors de la pose dans la carrosserie du vitrage 1, 34, prééquipé de son cadre profilé 7, 35, 39, on dépose la masse de la colle de pose dans le creux du U du profilé en élastomère thermoplastique. On a vu que cette colle était de préférence constituée d'une matière plastique qui polymérise par suite d'une réaction avec l'humidité. Si la seule humidité disponible est l'humidité de l'air la polymérisation peut être très longue. En effet, comme on le voit figure 3 les surfaces de contact entre le cordon de colle de pose 42 et l'atmosphère ambiante sont très limitées. Cependant, dans de nombreux cas, il peut être intéressant que la prise de colle s'effectue rapidement de manière à ce que par exemple on puisse démonter le pare-brise pour effectuer à son voisinage une retouche à la peinture de la carrosserie.

Pour raccourcir les durées nécessaires au durcissement de la colle de pose on a prévu dans le cadre de l'invention de déposer sur les surfaces internes du profilé en U au moins partiellement une couche qui contient de l'humidité ou des ions hydroxyles.

Ainsi l'humidité nécessaire à la prise de la colle de pose ne provient plus seulement de l'atmosphère environnant le cordon de colle mais provient également des surfaces de contact avec le profilé en élastomère thermoplastique. On peut grâce au choix de la matière de la couche et/ou grâce au choix de la fraction de la surface interne du U traitée, maîtriser les paramètres de la prise de la colle. Il est en effet important que la prise soit le plus rapide possible une fois le vitrage posé dans la carrosserie mais il est cependant nécessaire qu'elle soit suffisamment lente au niveau de la partie débordante du cordon de colle de pose pour que le durcissement ne soit pas effectué avant la mise en contact avec la tôle pour qu'elle puisse adhérer correctement à la carrosserie.

Les produits qui peuvent être utilisés sous forme de couches déposées sur la surface interne du U peuvent être par exemple des substances qui contiennent de l'eau et/ou des groupes hydroxyles comme les hydrates de carbone ou les alcools polyvinyliques. On a eu d'excellents résultats avec par exemple la méthylcellulose ou des dérivés cellulosés. L'effet de la rétention et de la libération de l'eau peut être selon les besoins amélioré par l'addition de sels hydrophiles ou hygroscopiques.

L'opération de dépôt d'une couche d'un matériau qui retient l'eau sur les parois internes du U du profilé en élastomère thermoplastique peut être effectuée à n'importe quel moment. Il est cependant préférable qu'elle suive immédiatement l'extrusion ou l'encapsulation du cadre profilé en élastomère thermoplastique.

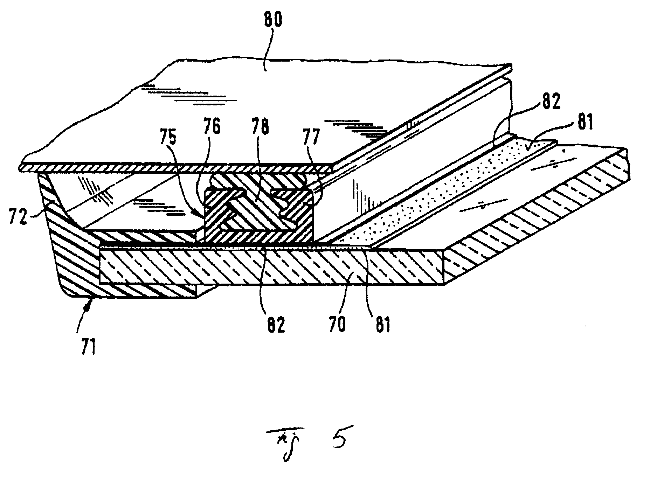

La figure 4 montre un exemple de réalisation du dépôt d'une telle couche. Elle montre une coupe du vitrage 1 qui est équipé à sa périphérie d'un cadre émaillé 3 et d'un cadre profilé 2 obtenu par extrusion directe sur l'émail 3. Le cadre profilé 2 pourrait aussi bien être obtenu par une technique d'encapsulation par moulage sous pression. De même, le cadre au lieu de n'être posé que sur l'une des surfaces du vitrage pourrait l'enchâsser. Le creux à l'intérieur du profilé 2 en U est constitué par les faces internes des deux ailes latérales 6 et 7 et par le fond 5. Conformément à l'invention les faces internes des ailes latérales 6 et 7 comportent des nervures longitudinales.

Dès que le profilé 2 a été complètement déposé à la périphérie du vitrage et alors que sa température est encore comprise entre 150 et 200°C on dépose à l'aide d'un pistolet 60 une solution aqueuse de méthylcellulose à l'intérieur du U. Ce dépôt peut être effectué tout comme l'extrusion du profilé 2 lui-même grâce à un robot qui dirige le pistolet 60. Il est même prévu que les deux outils, buse d'extrusion d'une part et pistolet de pulvérisation de l'autre puissent se succéder tout en étant entraîné simultanément par la "main" du robot.

Des solutions convenant à une pulvérisation pour déposer la couche contenant de l'eau ou des ions OH à la surface de l'intérieur du U du profilé 2 étaient constituées par exemple de 96 parties d'eau et de 4 parties de méthylcellulose ou bien de 95 parties d'eau, de 4 parties de méthylcellulose et d'une partie de sel marin.

Dans l'exemple de réalisation de la figure 4 on souffle de l'air dans le canal 61 qui conduit au pistolet 60. Ce canal 61 est relié à la sortie d'un réservoir 62 où est stockée une quantité importante 63 de la solution aqueuse de méthylcellulose. Par effet venturi, le courant d'air dans le canal 61 extrait la solution à la sortie de la vanne 64. Cette vanne permet de réguler le débit. Le brouillard de liquide qui sort du pistolet 60 est projeté sur les parois internes du U où il constitue un dépôt 65. Du fait qu'au moment de la pulvérisation de la solution le matériau du profilé 2 est encore à une température relativement élevée le séchage du dépôt s'effectue rapidement. La méthylcellulose, après séchage, est capable d'attirer et d'intégrer l'humidité de l'air environnant. Plus tard, cette humidité stockée dans le couche de méthylcellulose suffit, lorsqu'elle entre en contact avec la matière de la colle de pose déposée dans la partie creuse du U, pour provoquer son durcissement rapide.

Par comparaison avec les techniques d'extrusion, l'utilisation d'une méthode d'encapsulation par moulage haute pression pour déposer le profilé périphérique en élastomère thermofusible nécessite des moules spéciaux adaptés, ce qui complique l'opération d'encapsulation. En revanche l'encapsulation comparée à l'extrusion permet de donner au profilé des formes plus variées en particulier l'encapsulation permet la réalisation d'un joint périphérique qui entoure le chant du vitrage.

La figure 5 montre un vitrage 70 équipé d'un cadre constitué de deux éléments. Le vitrage est présenté installé dans la baie de carrosserie. Le cadre en élastomère comporte une première partie externe 71 qui enchâsse le bord du vitrage et un deuxième profilé 75 placé le long du premier et dirigé vers l'intérieur du vitrage qui possède, lui, la structure en U. Le cadre 71 possède, ici, à sa périphérie une nervure 72 dirigée vers la tôle 80 de la baie de carrosserie. Le cadre 71 est obtenu par une technique d'encapsulation réalisée à la périphérie du vitrage 70. En revanche, le profilé 75 est déposé, lui, par extrusion à l'aide d'une buse calibrée. Les deux ailes latérales 76 et 77 de ce dernier profil 75 sont équipées chacune sur leur face interne de nervures longitudinales destinées à permettre l'accrochage mécanique. Ce sont ces nervures qui dans le cas d'une encapsulation totale poseraient des problèmes au démoulage. Lorsque le vitrage est prêt à la pose, on dépose dans le canal interne du profilé 75 la colle de pose. Lorsque le vitrage équipé d'une part de son double cadre en élastomère, d'autre part du cordon de la colle de pose, est placé dans la baie de la carrosserie, la colle adhère à la tôle 80. En revanche, dans la mesure où les matériaux sont ceux qui ont été décrits plus haut, la colle de pose n'adhère pas à l'élastomère constituant le profilé en U. C'est seulement parce que la partie interne du U qui s'élargit vers le bas comporte les nervures adaptées que la colle durcie permet un accrochage mécanique entre la tôle et le verre par l'intermédiaire de la colle de pose et de l'élastomère déposé sur le verre.

Pour réaliser le cadre représenté figure 5, on procède de la manière suivante : le vitrage 70 qui a été équipé de manière connue lors de sa fabrication, d'un cadre en émail 81 qui est opaque est d'abord revêtu d'une couche de primaire 82 et cela sur toutes les surfaces qui seront en contact avec le cadre. Il est intéressant d'utiliser pour ce primaire un produit qui convienne aussi bien à l'adhérence du polymère d'encapsulation qu'à l'élastomère thermoplastique d'extrusion. Dans le cas où tous deux sont constitués du même élastomère thermoplastique les primaires qui ont été cités plus haut conviennent.

Le vitrage ainsi préparé est placé dans le demi-moule inférieur prévu pour l'encapsulation. Le demi-moule supérieur est alors mis en place et l'ensemble fermé de manière étanche sur le verre. On injecte ensuite sous pression un polymère dans les conditions adaptées à une encapsulation de qualité. S'il s'agit d'un élastomère thermoplastique il est à la température qui permet l'injection. Cette température est telle qu'après démoulage le vitrage lui-même est en général au moins à une température de 80°C. Si l'encapsulation a été faite à froid, on réchauffe le verre. Le vitrage qui est alors équipé du cadre extérieur 71 démoulé est transféré sur une table de travail située en général près du poste d'encapsulation. Dès qu'il est en position on procède à l'extrusion du profilé 75 dans les conditions habituelles.

## Revendications

1. Vitrage pour le montage par collage sur la tôle d'une baie en particulier vitrage automobile comportant un profilé en forme de cadre à sa périphérie, profilé qui comporte une section en U dirigée vers la tôle de la baie et est constitue d'un polymère, le profilé comportant deux ailes équipées vers l'intérieur du U de nervures servant à l'accrochage du cordon de colle de pose qui durcit en place dans le canal en U lors de la pose du vitrage et de l'adhésion de la colle à la baie, le profilé et la colle ne montrant aucune adhérence l'un avec l'autre de telle sorte que la liaison entre le profilé et la colle durcie soit purement de nature mécanique due à la forme, **caractérisé en ce que** le profilé en forme de cadre est au moins partiellement, dans la zone avec une section en forme de U, à base d'un élastomère polyoléfine thermoplastique fait d'un polypropylène isotactique et d'un caoutchouc éthylène-propylène-diène **et en ce que** la colle de pose est à base d'un système de polyuréthane monocomposant polymérisant à l'humidité.

2. Vitrage selon la revendication 1, **caractérisé en ce que** l'intérieur de la section en U du profilé en forme de cadre possède une forme de sapin de Noël.

3. Vitrage selon la revendication 1 ou 2, **caractérisé en ce que** la surface de l'intérieur du U du profilé en forme de cadre qui vient en contact avec la colle de pose est équipée au moins partiellement d'une couche qui contient de l'humidité et/ou des ions hydroxyles.

4. Vitrage selon la revendication 3, **caractérisé en ce que** la couche qui contient de l'humidité et/ou des ions hydroxyles est constituée d'un hydrate de carbone à haut poids moléculaire et/ou d'un alcool polyvinylique.

5. Vitrage selon la revendication 3, **caractérisé en ce que** la couche qui contient de l'humidité et/ou des ions hydroxyles est à base de méthylcellulose.

6. Vitrage selon l'une des revendications 3 à 5, **caractérisé en ce que** la couche qui contient de l'humidité et/ou des ions hydroxyles comporte en plus un sel hydrophile ou hygroscopique.

7. Procédé pour fabriquer un vitrage selon l'une des revendications 3 à 6, **caractérisé en ce qu'**on dépose sur le vitrage le profilé en forme de cadre qui comporte une section en U **et en ce qu**'immédiatement après ce dépôt, alors que le profilé est encore chaud, on dépose la solution permettant d'obtenir la couche qui contient de l'humidité et/ou des ions hydroxyles.

## Claims

1. Pane for mounting by gluing onto the surrounding sheet of a window opening, in particular automobile pane, comprising a frame-shaped profile at its periphery, which profile possesses a U-section facing towards the sheeting of the window opening and is constituted of a polymer, the profile possessing two flanges provided, towards the interior of the U, with ribs serving for gripping the positioning adhesive cord which hardens in place in the U-shaped channel during the positioning of the pane and the bonding of the adhesive to the window opening, the profile and the adhesive not exhibiting any bond to one another so that the connection between the profile and the hardened adhesive is purely of a mechanical nature due to the shape, characterized in that the frame-shaped profile is at least partly, in the zone with a U-shaped section, based upon a thermoplastic polyolefin elastomer made of an isotactic polypropylene and an ethylene-propylene-diene rubber, and in that the positioning adhesive is based upon a single-component polyurethane system polymerizing with humidity.

2. Pane according to claim 1, characterized in that the interior of the U-section of the frame-shaped profile has the shape of a Christmas tree.

3. Pane according to claim 1 or 2, characterized in that the internal surface of the U of the frame-shaped profile which comes into contact with the positioning adhesive is provided, at least partly, with a film that contains humidity and/or hydroxyl ions.

4. Pane according to claim 3, characterized in that the film that contains humidity and/or hydroxyl ions is constituted of a carbohydrate of high molecular weight and/or a polyvinyl alcohol.

5. Pane according to claim 3, characterized in that the film that contains humidity and/or hydroxyl ions is based upon methyl cellulose.

6. Pane according to one of claims 3 to 5, characterized in that the film that contains humidity and/or hydroxyl ions comprises, in addition, a hydrophilic or hygroscopic salt.

7. Method of making a pane according to one of claims 3 to 6, characterized in that the frame-shaped profile which has a U-section is deposited on the pane and in that, immediately after this deposition while the profile is still hot, the solution making possible the production of the film that contains humidity and/or hydroxyl ions is deposited.

## Patentansprüche

1. Glasscheibe für die Verklebung mit dem Befestigungsflansch eines Fensterrahmens, insbesondere Autoglasscheibe, mit einem am Rand angeordneten, aus einem Polymer bestehenden rahmenartigen Profil mit einem gegen den Befestigungsflansch gerichteten U-förmigen Abschnitt, wobei das Profil zwei Stege umfaßt, die zur Innenseite des U mit Verankerungsvorsprüngen für den Montagekleber versehen sind, der an Ort und Stelle innerhalb des U-förmigen Kanals beim Einsetzen der Glasscheibe und während der Haftung des Klebers auf dem Befestigungsflansch aushärtet, wobei das Profil und der Kleber keine Haftung miteinander eingehen, so daß die Verbindung zwischen dem Profil und dem ausgehärteten Kleber allein mechanisch durch Formschluß erfolgt, **dadurch gekennzeichnet,** daß das rahmenartige Profil wenigstens teilweise, nämlich in dem Bereich mit U-förmigem Querschnitt, aus einem thermoplastischen Polyolefin-Elastomer aus einem isotaktischen Polypropylen und ein Ethylen-Propylen-Dien-Kautschuk besteht, und daß der Montagekleber aus einem feuchtigkeitshärtenden Einkomponenten-Polyurethan-System besteht.

2. Glasscheibe nach Anspruch 1, dadurch gekennzeichnet, daß der Hohlraum des U-förmigen Abschnitts des Profils einen tannenbaumförmigen Querschnitt aufweist.

3. Glasscheibe nach Anspruch 1 oder 2, dadurch gekennzeichnet, daß die innere Oberfläche des U-förmigen Abschnitt des rahmenartigen Profils, die mit dem Montagekleber in Berührung kommt, wenigstens teilweise mit einer Feuchtigkeit und/oder Hydroxylionen enthaltenden Schicht versehen ist.

4. Glasscheibe nach Anspruch 3, dadurch gekennzeichnet, daß die Feuchtigkeit und/oder Hydroxylionen enthaltende Schicht aus einem Kohlehydrat mit hohem Molekulargewicht und/oder einem Polyvinylalkohol besteht.

5. Glasscheibe nach Anspruch 3, dadurch gekennzeichnet, daß die Feuchtigkeit und/oder Hydroxylionen enthaltende Schicht auf Methylcellulose basiert.

6. Glasscheibe nach einem der Ansprüche 3 bis 5, dadurch gekennzeichnet, daß die Feuchtigkeit und/oder Hydroxylionen enthaltende Schicht außerdem ein hydrophiles oder hygroskopisches Salz enthält.

7. Verfahren zum Herstellen einer Glasscheibe nach einem der Ansprüche 3 bis 6, dadurch gekennzeichnet, daß auf der Glasscheibe das einen U-förmigen Abschnitt umfassende rahmenartige Profil abgelegt wird, und daß unmittelbar nach dem Ablegen des Profils, solange dieses noch warm ist, eine Lösung aufgebracht wird, aus der man die Feuchtigkeit und/oder Hydroxylionen enthaltende Schicht erhält.
